# EUROPÄISCHE PATENTANMELDUNG

(11) **EP 0 748 709 A1**
(43) Veröffentlichungstag der Anmeldung: **18.12.1996**
(21) Anmeldenummer: 96109468.7
(22) Anmeldetag: 13.06.1996
(51) Int. Cl.: B60J 1/10, B61D 25/00, B60J 9/02

(54) **Entriegelungsvorrichtung für eine Fensterscheibe, insbesondere für Eisenbahnwaggons, mit einem Schieber**

(30) Priorität: 16.06.1995 DE 19521876
(71) Anmelder: Dynamit Nobel GmbH Explosivstoff- und Systemtechnik, 53840 Troisdorf (DE)
(72) Erfinder: Brede, Uwe, 90765 Fürth (DE); Bretfeld, Anton, 90765 Fürth (DE); Fibranz, Joachim, 90765 Fürth (DE); Kordel, Gerhard, 90455 Nürnberg (DE); Kraft, Josef, 92348 Berg (DE); Lehniger, Peter, 91056 Erlangen (DE); Reimer, Jens-Peter, 91074 Herzogenaurach (DE)
(74) Vertreter: Scherzberg, Andreas, Dr.

(57) **Zusammenfassung**

Die Erfindung betrifft eine Entriegelungsvorrichtung für eine Fensterscheibe (1), insbesondere für Eisenbahnwaggons, die über ein Dichtungsprofil (2) an ein Rahmenelement (3) anliegt, wobei die Fensterscheibe (1) über ein Befestigungselement am Rahmenelement (3) befestigt ist und ein Entriegelungselement vorgesehen ist, welches bei Betätigung die Verbindung des Befestigungselements mit dem Rahmenelement (3) löst

Zur zerstörungsfreien und sicheren Entriegelung wird vorgeschlagen, daß das Entriegelungselement ein Schieber (4) ist und in einer Schließstellung des Schiebers (4) das Befestigungselement gehalten und in einer Auswurfstellung das Befestigungselement freigegeben wird.

## Beschreibung

Die Erfindung betrifft eine Entriegelungsvorrichtung für eine Fensterscheibe, insbesondere für Eisenbahnwaggons nach dem Oberbegriff des Anspruchs 1.

Moderne Eisenbahnwaggons werden häufig mit Klimaanlagen ausgestattet. Dies bedingt die Forderung nach einer höheren Wärmedämmung der Fenster. Bei Hochgeschwindigkeitszügen kommt zusätzlich noch die Forderung nach einer guten Schallisolierung und einer großen dynamischen Festigkeit (Ein-/Ausfahrt von Tunnels, Züge auf dem Gegengleis) hinzu. Aufgrund dieser gestiegenen Anforderungen werden Fenster verlangt, die eine so hohe Stabilität besitzen, daß sie manuell (vor allem in der Dunkelheit oder bei Panik-Situationen) nicht mehr zerstört bzw. geöffnet werden können. Um diese Forderungen erfüllen zu können, werden in modernen Hochgeschwindigkeitszügen Isolierglasfenster verbunden mit Verbundglasscheiben verwendet.

Aus der DE-A1-39 25 430 ist eine Entriegelungsvorrichtung für eine Fensterscheibe bekannt, die über ein Dichtungsprofil mit einem Rahmenelement verbunden ist, wobei die Fensterscheibe über ein Befestigungselement am Rahmenelement befestigt ist. In diesem oder am Befestigungselement ist ein mit Gas füllbarer, verformbarer Schlauch angeordnet, der im aufgeblasenen Zustand die Befestigung der Fensterscheibe aufreißt, so daß die Fensterscheibe aus dem Rahmenelement fällt.

Der Erfindung liegt die Aufgabe zugrunde, eine Entriegelungsvorrichtung für eine Fensterscheibe, inbesondere für Eisenbahnwaggons, nach dem Oberbegriff des Anspruchs 1 zu schaffen, die mit einfachen Mitteln nahezu 100 %-ig sicherstellt, daß im Notfall die Fensterscheibe aus dem Rahmen fällt. Außerdem soll dabei die Fensterscheibe wenn möglich nicht zerstört werden.

Erfindungsgemäß wird diese Aufgabe dadurch gelöst, daß das Entriegelungselement ein Schieber ist und in einer Schließstellung des Schiebers das Befestigungselement gehalten und in einer Auswurfstellung das Befestigungselement freigegeben wird.

Mit diesen Schiebern ist eine einfache und absolut sichere Entriegelung der Fensterscheibe möglich.

In bevorzugter Ausführungsform ist das Befestigungselement eine mit der Fensterscheibe fest verbundene Gewindebuchse, in die eine Montageschraube eingedreht wird. Die Gewindebuchse kann z.B. auf die Fensterscheibe geklebt oder aber eingelassen werden.

Erfindungsgemäß sind zur Befestigung zwischen der Montageschraube und der Gewindebuchse der Schieber und das Rahmenelement angeordnet. Die Montageschraube befindet sich dabei vorteilhafterweise in einer Langlochbohrung im Schieber, der von einer Schließstellung zu einer Auswurfstellung für die Montageschraube verschiebbar ist. In der Auswurfstellung ist der Durchmesser der Langlochbohrung so groß, daß die Montageschraube hindurchrutschen kann.

In einer bevorzugten alternativen Ausführungsform ist in der Montageschraube eine Bohrung angeordnet, in die in der Schließstellung ein Sperrdorn des Schiebers eingreift.

In einer anderen vorteilhaften Ausführungsform ist die Montageschraube mit einer Sollbruchstelle versehen, wobei der Schieber einen Meißel aufweist der im Betätigungsfall des Schiebers die Montageschraube abschert.

Zweckmäßigerweise ist die Fensterscheibe in Auswurfrichtung über eine Feder kraftbeaufschlagt. Hierdurch wird die Fensterscheibe nicht nur entriegelt, sondern zugleich auch aus dem Rahmen gestoßen. In bevorzugter Weise umgibt die Feder die Gewindebuchse oder die Montageschraube. Sie ist dabei einerseits an der Fensterscheibe und andererseits z.B. am Rahmenelement des Fensters abgestützt.

Alternativ oder zusätzlich zur oben beschriebenen Feder ist vorteilhafterweise am Schieber ein Auswerfer in Form einer Schräge angeordnet, die bei der Betätigung des Schiebers in die Auswurfstellung das Befestigungselement bzw. die Montageschraube in Auswurfrichtung kraftbeaufschlagt.

Damit ein sicheres Entriegeln der Fensterscheibe erfolgt, wird in bevorzugter Ausführungsform das Entriegelungselement durch mindestens zwei gleichwirkende Kraftelemente redundant betätigt.

Bevorzugt ist das Kraftelement ein pyrotechnisches Element. Es können jedoch auch z.B. hydraulische, manuelle oder elektromechanische Kraftelemente verwendet werden.

In weiterer bevorzugter Ausführungsform sind zumindest zwei Schieber in ihrer Bewegung miteinander gekoppelt. Wenn ein Kraftelement aus irgendeinem Grund ausfällt, wird dadurch der betreffende Schieber von dem benachbarten Schieber in die Auswurfstellung verschoben. Dies erhöht die Sicherheit beträchtlich.

Sinnvollerweise sind Schieber zumindest zweier benachbarter Fensterseiten über ein Stahlseil mit einer Umlenkrolle oder über einen Kurbeitrieb mit Nockenscheibe miteinander verbunden. Hierdurch tritt ein Mitzieheffekt bzw. ein Mitdrückeffekt ein, je nachdem ob ein Zug- oder Druckkraftelement verwendet wird.

In speziell vorteilhafter Ausführungsform ist auf allen vier Fensterseiten je ein Schieber und auf den vier Eckseiten jeweils ein Kraftelement angeordnet.

Alternativ können natürlich auch nur oben und unten Schieber bzw. Scharnierbeschläge angeordnet sein.

In vorteilhafter erfindungsgemäßer Ausführungsform ist das Rahmenelement mit der Fensterscheibe über eine Fangvorrichtung verbunden, die die Fensterscheibe nach dem Entriegeln auffängt. Hierdurch ist die Gefahr der Verletzung von Personen beseitigt.

Weitere Merkmale der Erfindung ergeben sich aus den Figuren, die nachfolgend beschrieben werden.
Es zeigt:
- Fig. 1 a bis d: eine Entriegelungsvorrichtung mit einem Schieber in dem ein Langloch mit einer Schließstellung und einer Auswurfstellung angeordnet ist,
- Fig. 2 a bis d: eine Entriegelungsvorrichtung mit einem Sperrdorn am Schieber,
- Fig. 3 a bis d: eine Entriegelungsvorrichtung mit einem Meißel am Schieber zur Abscherung der Montageschraube,
- Fig. 4: zwei Schieber, die miteinander über ein Stahlseil verbunden sind,
- Fig. 5: zwei Schieber, die miteinander über einen Kurbeitrieb mit Nockenscheibe verbunden sind,
- Fig. 6: eine Entriegelungsvorrichtung mit jeweils einem Kraftelement auf den vier Eckpunkten der Fensterscheibe und
- Fig. 7 a,b: eine Entriegelungsvorrichtung mit einer Fangvorrichtung.

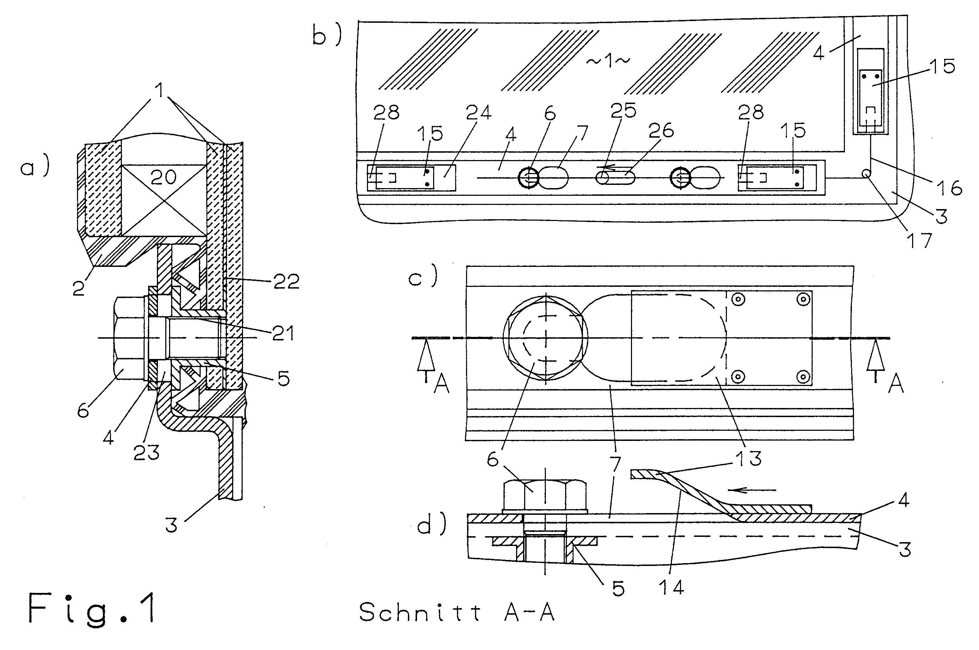

Die Figuren 1 a bis d zeigen eine erfindungsgemäße Entriegelungsvorrichtung mit einer Fensterscheibe 1, die aus einer Isolierglas-Verbundscheibe mit drei Scheiben besteht. Zwei nach außen gerichtete Verbundglasscheiben sind über einen Abstandshalter 20 mit einer dritten Scheibe verbunden. Über ein Dichtungsprofil 2 ist die Fensterscheibe 1 mit einem Rahmenelement 3 verbunden. Die eigentliche Befestigung erfolgt über ein Befestigungselement, welches aus einer Gewindebuchse 5 und einer Montageschraube 6 besteht. Die Gewindebuchse 5 besteht aus einem zylinderförmigen Rohr mit einem Innengewinde 21 und aus jeweils einer kragenförmigen Erweiterung an den Enden des Rohres. Zur Befestigung ist die zur Fensterscheibe 1 gewandte kragenförmige Erweiterung 22 zwischen die Verbundscheiben eingesetzt. Über die Montageschraube 6, die in das Gewinde 21 der Gewindebuchse 5 eingeschraubt ist, ist die Gewindebuchse 5 und damit die Fensterscheibe 1 mit dem Rahmenelement 3 fest verbunden. Zwischen der Montageschraube 6 und dem Rahmenelement 3 ist als Entriegelungselement ein Schieber 4 angeordnet. In dem Schieber 4 befindet sich eine Langlochbohrung 7, deren Durchmesser so gewählt ist, daß die Montageschraube 6 in der Schließstellung gehalten ist und in der Auswurfstellung hindurchrutschen kann. Der Kopf der Montageschraube 6 ist dabei kleiner als die Öffnung 23 im Rahmenelement 3, so daß in der Auswurfstellung die Montageschraube 6 sowohl durch den Schieber 4 als auch durch das Rahmenelement 3 rutscht. Die Fensterscheibe 1 ist dann entriegelt.

Fig. 1 b und c zeigen die Anordnung des Schiebers 4 am Fensterrahmen und den Schieber im Detail. Je ein Schieber 4 ist auf einer Fensterseite angeordnet. Betätigt wird der Schieber 4 durch Kraftelemente 15, welche den Schieber 4 von der in den Figuren 1 b und c gezeigten Schließstellung in die Auswurfstellung bewegen. Hierzu weist das Kraftelement 15 einen herausschiebbaren Kolben auf der z.B. pyrotechnisch angetrieben ist. Das Kraftelement 15 ist in einer Ausnehmung 24 im Schieber 4 angeordnet, wobei der herausschiebbare Kolben 28 in die Betätigungsrichtung zeigt. Geführt ist der Schieber 4 über einen Stift 25, der am Rahmen festliegt und in ein Langloch 26 im Schieber ragt. Damit der Schieber besser geführt wird, kann der Stift 25 mit einem Kopf ausgeführt sein. Die beiden Eckpunkte des Langlochs 26 markieren die Schließstellung und die Auswurfstellung. Für jede Montageschraube 6 befindet sich eine Langlochbohrung 7 im Schieber 4, die ein Ende aufweist, welches im Durchmesser geringer als der Durchmesser des Kopfes der Montageschraube 6 ist. Das entgegengesetzte Ende der Langlochbohrung 7 hat einen größeren Durchmesser als der Kopf der Montageschraube 6, so daß die Montageschraube 6 durch diesen Bereich hindurchrutschen kann.

Wie in Fig. 1b gezeigt, wird ein Schieber 4 vorteilhafterweise von zwei Kraftelementen 15 betätigt. Die Schieber 4 zweier benachbarter Scheibenseiten sind dabei noch über ein Stahlseil 16 mit Umlenkrollen 17 verbunden, so daß der auf der Zeichnung gezeigte untere Schieber 4 den vertikalen Schieber 4 mitzieht. Hierdurch ist eine absolute Sicherheit gewährleistet.

Die Figuren 1c und d zeigen am Schieber 4 einen Auswerfer 13 in Form einer Schräge 14, die bei der Betätigung des Schiebers 4 in die Auswurfstellung die Montageschraube 6 in die Auswurfrichtung kraftbeaufschlagt.

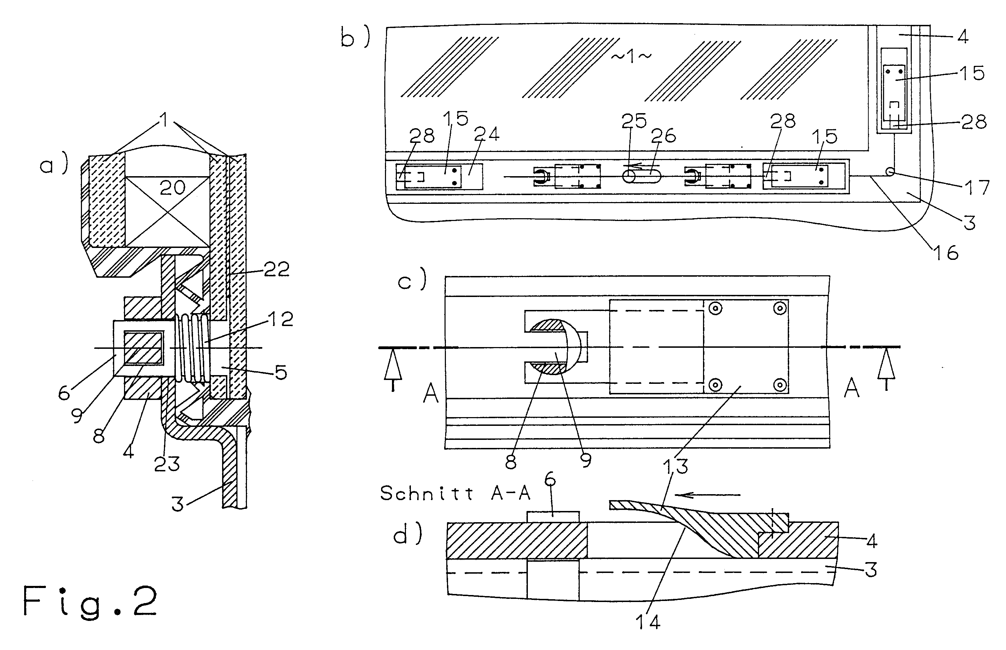

In den Figuren 2 a bis d ist eine alternative Ausführungsform der Entriegelung gezeigt. In die Gewindebuchse 5, die kürzer ausgebildet ist als die in Fig. 1a gezeigte, ist eine Montageschraube 6 mit einer Bohrung 8 im Kopf eingeschraubt. Der Schieber 4 liegt hier von außen auf dem Rahmenelement 3 auf und weist einen Sperrdorn 9 auf, der in die Bohrung 8 der Montageschraube 6 hineinreicht. Der Durchmesser des Kopfes der Montageschraube ist kleiner als der der Öffnung 23 im Rahmenelement 3, so daß die Montageschraube 6 alleine durch den Sperrdorn 9 gehalten ist. Um die Montageschraube 6, zwischen der Gewindebuchse 5 und dem Rahmenelement 3, ist zum besseren Auswerfen der Fensterscheibe 1 eine Feder 12 angeordnet. Diese Feder 12 unterstützt noch den Auswerfer 13 mit seiner Schräge 14, die in den Figuren 1 c und d gezeigt ist. Ansonsten ist die in den Figuren 2 a bis d gezeigte Entriegelungsvorrichtung mit der in den Figuren 1a bis d nahezu identisch. In ihrer Wirkung sind die gleichen Teile mit den identischen Bezugszeichen beziffert.

Bei der Betätigung des Schiebers 4 durch die Kraftelemente 15 wird der Sperrdorn 9 aus der Bohrung 8 in der Montageschraube 6 gezogen, so daß diese durch das Rahmenelement 3 rutscht. Die Fensterscheibe 1 ist dann entriegelt.

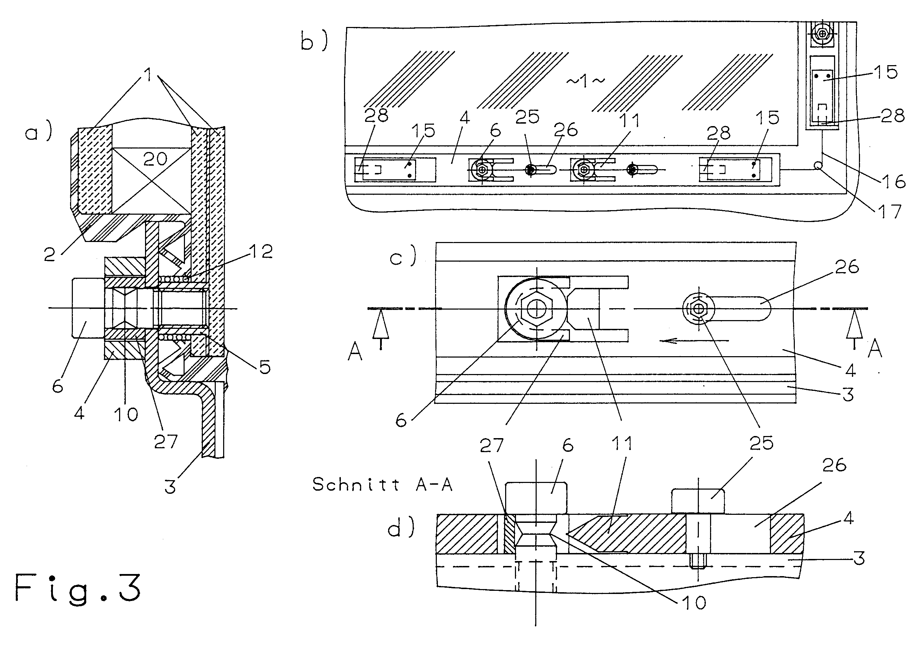

Die Figuren 3 a bis d zeigen eine Ausführungsform, bei der in der Montageschraube 6 eine Solibruchstelle 10 angeordnet ist, die im Betätigungsfall von einem Meißel 11 am Schieber 4 abgeschert wird. Der Schieber 4 liegt dabei wieder von außen auf dem Rahmenelement 3 auf. Zum besseren Auswerfen ist eine Feder 12 in die Gewindebuchse 5 zwischen der Fensterscheibe 1 und dem Rahmenelement 3 angeordnet. Der Schieber 4 weist einen Meißel 11 bzw. ein Abscherorgan auf, welches in der Schließstellung neben der Sollbruchstelle 10 angeordnet ist. Zur Halterung der Montageschraube 6 ist diese auf eine Muffe 27 aufgesetzt, die eine offene Seite zum Meißel 11 aufweist. Diese Muffe 27 liegt auf dem Rahmenelement 3 auf. Auf der Muffe 27 ist der Kopf der Montageschraube 6 abgestützt. Im Betätigungsfall schert der Meißel 11 die Montageschraube 6 an der Sollbruchstelle 10 ab, so daß die Fensterscheibe 1 entriegelt ist.

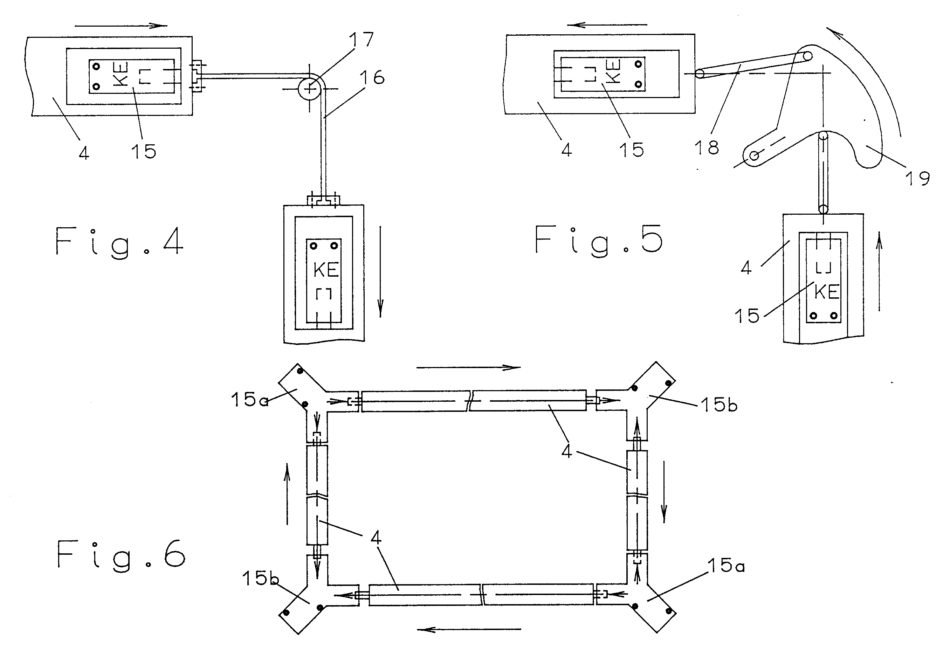

Fig. 4 zeigt noch einmal die Verbindung zweier benachbarter Schieber 4 über ein Stahlseil 16, welches auf einer Umlenkrolle 17 geführt ist. Beide in Fig. 4 gezeigten Kraftelemente 15 drücken die jeweiligen Schieber 4 in die mit einem Pfeil gekennzeichneten Richtungen. Über das Stahlseil 16 ist diese Bewegung gekoppelt, so daß beim Ausfall eines Kraftelementes 15 die Funktion vom anderen Kraftelement 15 übernommen wird.

Fig. 5 zeigt die gleiche Anordnung wie in Fig. 4, nur ist hier die Verbindung über einen Kurbeltrieb 18 mit Nockenscheibe 19 realisiert.

Fig. 6 zeigt eine Entriegelungsvorrichtung mit je einem Schieber 4 auf allen vier Seiten der Fensterscheibe 1. Auf den vier Eckpunkten ist jeweils ein doppelwirkendes Kraftelement angeordnet, wobei die Kraftelemente 15a ausstoßend und die Kraftelemente 15b anziehend ausgebildet sind. Hierdurch sind alle vier Schieber 4 miteinander redundant gekoppelt.

Bevorzugt eignen sich die beschriebenen Entriegelungsvorrichtungen für Fensterscheiben in Eisenbahnwaggons.

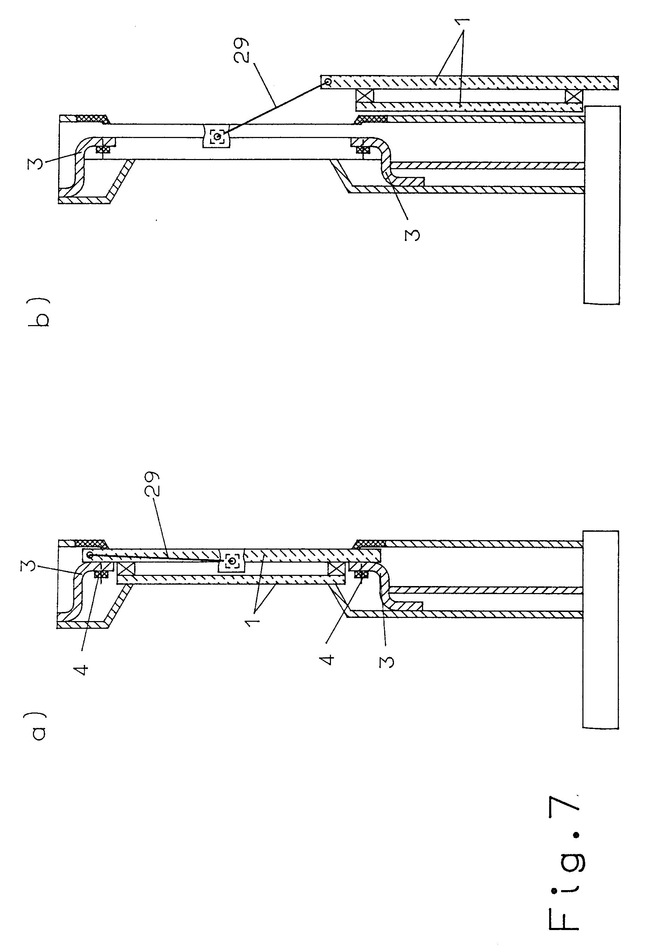

Fig. 7a zeigt eine Fensterscheibe 1 in einem Eisenbahnwaggon in einem Rahmenelement 3. Die weiter oben beschriebene Entriegelungsvorrichtung ist mit dem Bezugszeichen 4 angedeutet. Damit beim Entriegeln der Fensterscheibe 1 niemand verletzt wird, ist die Fensterscheibe 1 und das Rahmenelement 3 über eine Fangvorrichtung, hier ein Seil 29, verbunden. Fig. 7a zeigt die Fensterscheibe 1 im geschlossenen und Fig. 7b im entriegelten Zustand. Im entriegelten Zustand wird die Fensterscheibe 1 vom Seil 29 gehalten.

## Patentansprüche

1. Entriegelungsvorrichtung für eine Fensterscheibe (1), insbesondere für Eisenbahnwaggons, die über ein Dichtungsprofil (2) an ein Rahmenelement (3) anliegt, wobei die Fensterscheibe (1) über ein Befestigungselement am Rahmenelement (3) befestigt ist und ein Entriegelungselement vorgesehen ist, welches bei Betätigung die Verbindung des Befestigungselements mit dem Rahmenelement (3) löst, **dadurch gekennzeichnet**, daß das Entriegelungselement ein Schieber (4) ist und in einer Schließstellung des Schiebers (4) das Befestigungselement gehalten und in einer Auswurfstellung das Befestigungselement freigegeben wird.

2. Entriegelungselement nach Anspruch 1, **dadurch gekennzeichnet**, daß das Befestigungselement eine mit der Fensterscheibe (1) fest verbundene Gewindebuchse (5) ist, in die eine Montageschraube (6) eingeschraubt ist.

3. Entriegelungsvorrichtung nach Anspruch 1 oder 2, **dadurch gekennzeichnet**, daß zwischen der Montageschraube (6) und der Gewindebuchse (5) der Schieber (4) und das Rahmenelement (3) angeordnet sind und die Montageschraube (6) sich in einer Langlochbohrung (7) im Schieber (4) befindet und der Schieber (4) von einer Schließstellung in eine Auswurfstellung für die Montageschraube (6) verschiebbar ist.

4. Entriegelungsvorrichtung nach Anspruch 2 oder 3, **dadurch gekennzeichnet**, daß in der Montageschraube (6) eine Bohrung (8) angeordnet ist, in die in der Schließstellung ein Sperrdorn (9) des Schiebers (4) eingreift.

5. Entriegelungsvorrichtung nach Anspruch 2 oder 3, **dadurch gekennzeichnet**, daß die Montageschraube (6) mit einer Sollbruchstelle (10) versehen ist und der Schieber (4) einen Meißel (11) aufweist, der im Betätigungsfall des Schiebers (4) die Montageschraube (6) abschert.

6. Entriegelungsvorrichtung nach einem der Ansprüche 1 bis 5, **dadurch gekennzeichnet**, daß die Fensterscheibe (1) in Auswurfrichtung über eine Feder (12) federbelastet ist.

7. Entriegelungsvorrichtung nach Anspruch 6, **dadurch gekennzeichnet**, daß die Feder (12) die Gewindebuchse (5) oder die Montageschraube (6) umgibt.

8. Entriegelungsvorrichtung nach einem der Ansprüche 1 bis 7, **dadurch gekennzeichnet**, daß am Schieber (4) ein Auswerfer (13) in Form einer Schräge (14) angeordnet ist, die bei der Betätigung des Schiebers (4) in die Auswurfstellung das Befestigungselement bzw. die Montageschraube (6) in Auswurfrichtung kraftbeaufschlagt.

9. Entriegelungsvorrichtung nach einem der Ansprüche 1 bis 8, **dadurch gekennzeichnet**, daß das Entriegelungselement durch mindestens zwei gleichwirkende Kraftelemente (15) redundant betätigt wird.

10. Entriegelungsvorrichtung nach einem der Ansprüche 1 bis 9, **dadurch gekennzeichnet**, daß zumindest zwei Schieber (4) in ihrer Bewegung miteinander gekoppelt sind.

11. Entriegelungsvorrichtung nach Anspruch 10, **dadurch gekennzeichnet**, daß die Schieber (4) zumindest zweier benachbarter Fensterseiten über ein Stahlseil (16) mit Umlenkrolle (17) oder über einen Kurbeitrieb (18) mit Nockenscheibe (19) verbunden sind.

12. Entriegelungsvorrichtung nach einem der Ansprüche 1 bis 10, **dadurch gekennzeichnet**, daß auf allen vier Fensterseiten jeweils ein Schieber (4) und auf den vier Fensterecken jeweils ein Kraftelement (15) angeordnet ist.

13. Entriegelungsvorrichtung nach einem der Ansprüche 1 bis 12, **dadurch gekennzeichnet**, daß das Rahmenelement (3) mit der Fensterscheibe (1) über eine Fangvorrichtung (29) verbunden ist, die die Fensterscheibe (1) nach dem Entriegeln auffängt.
